# EUROPEAN PATENT APPLICATION

(11) **EP 4 579 125 A1**
(43) Date of publication of application: **02.07.2025**
(21) Application number: 23861925.8
(22) Date of filing: 31.05.2023
(51) Int. Cl.: F21S 41/675, F21V 13/06, G03B 21/28, F21W 107/10, F21W 102/13, F21S 41/143, F21S 41/147, F21S 41/16, F21S 41/20, F21S 41/32, F21S 41/365, F21S 41/40, F21S 41/689, F21W 102/17, F21W 102/40, B60Q 1/08

(54) **PROJECTION MODULE AND VEHICLE**

(30) Priority: 09.09.2022 CN 202222401752 U; 15.02.2023 CN 202310140825
(71) Applicant: Shenzhen Yinwang Intelligent Technologies Co., Ltd., Shenzhen, Guangdong 518129 (CN)
(72) Inventor: ZOU, Huan, Shenzhen, Guangdong 518129 (CN); MA, Ming, Shenzhen, Guangdong 518129 (CN); DUAN, Junke, Shenzhen, Guangdong 518129 (CN)
(74) Representative: MERH-IP Matias Erny Reichl Hoffmann Patentanwälte PartG mbB
(86) International application number: PCT/CN2023/097647
(87) International publication number: WO 2024/051221

(57) **Abstract**

A projection module may be applied to a lighting system of a transport tool, another projection scenario with limited space, and the like. The projection module includes: a light source device (101), a lens group (102), a reflection unit (103), and a rotating component (104) connected to the reflection unit (103). Light emitted by the light source device (101) passes through the lens group (102) to form a light beam, and the light beam is projected to the outside of the transport tool. The reflection unit (103) is configured to change a transmission direction of the light beam, and the rotating component (104) is configured to adjust a position of the reflection unit (103), to change a projection position of the light beam. In other words, the projection module performs short-range/long-range imaging outside the transport tool by adjusting the position of the reflection unit (103).

## Description

This application claims priorities to Chinese Patent Application No. 202222401752.1, filed with the China National Intellectual Property Administration on September 9, 2022 and entitled "PROJECTION MODULE AND TRANSPORT TOOL", and to Chinese Patent Application No. 202310140825.2, filed with the China National Intellectual Property Administration on February 15, 2023 and entitled "PROJECTION MODULE AND TRANSPORT TOOL", both of which are incorporated herein by reference in their entireties.

### TECHNICAL FIELD

This application relates to the display field, and in particular, to a projection module and a transport tool.

### BACKGROUND

With development of the automobile industry, a lighting unit of an automobile headlight is changed from a lighting unit initially at a fixed position to a lighting unit whose pitching angle can be manually adjusted, and then evolved into a lighting unit that senses a pitching posture of a vehicle body through a position sensor on a chassis suspension.

At present, the lighting unit is connected to a bracket, and the bracket is arranged with a rotating shaft in a horizontal direction, and is fitted in a slot of a headlight housing. A lower edge of the bracket and a round head of a motor are fastened through a ball-and-socket j oint. An output signal of the position sensor is sent to an electronic control unit (electronic control unit, ECU) to drive the motor connected to the lighting unit. The motor pushes the edge to rotate around a fulcrum to tilt the entire lighting unit. As a ramp and a road surface undulate, a light output angle and a position of a light beam on a ground are adaptively changed. In other words, an assembly of the bracket and the lighting unit is tilted up and down, to achieve guest imaging or front lighting.

However, a rotation process in the foregoing solution requires large space, but a boundary of the automobile headlight is usually limited.

### SUMMARY

This application provides a projection module and a transport tool. A reflection unit is added to the projection module, and a position of the reflection unit is adjusted through a rotating component, to change a projection position of a light beam. This can reduce a space requirement, and can reduce a motor torque, a drive current specification, power consumption and costs, and carbon dioxide emissions.

A first aspect of embodiments of this application provides a projection module, which may be applied to a lighting system of a transport tool, another projection scenario with limited space, and the like. The projection module includes: a light source device, a lens group, a reflection unit, and a rotating component connected to the reflection unit. Light emitted by the light source device passes through the lens group to form a light beam, and the light beam is projected to the outside of the transport tool. The reflection unit is configured to change a transmission direction of the light beam, and the rotating component is configured to adjust a position of the reflection unit, to change a projection position of the light beam.

In embodiments of this application, a reflector is added to the projection module, and a position of the reflector is adjusted through the rotating component, to change the projection position of the light beam. For example, the light beam is projected to a ground that is a close range (namely, a first distance range) or a far range (namely, a second distance range) away from the transport tool for imaging. A solution in which a motor rotates the entire module is replaced by the solution in which the position of the reflector is adjusted to perform projection at different distances. Therefore, the adjustment of the position of the reflector has a small requirement on space, thereby reducing space occupied by the camera module and reducing space occupied by the camera module; and the rotating component does not need to rotate the entire module, but rotates the reflector in the projection module, thereby reducing a motor torque, a drive current specification, power consumption and costs, and carbon dioxide emissions. In addition, in a greeting mode, in comparison with the solution in which the motor rotates the entire module, the projection module adjusts the position of the reflector through the rotating component, so that the light beam can be projected to the ground that is closer to the transport tool for imaging.

Optionally, in a possible implementation of the first aspect, in the greeting mode of the transport tool, that the rotating component is configured to adjust a position of the reflection unit, to change a projection position of the light beam includes: The rotating component is configured to adjust the position of the reflection unit, so that the reflection unit receives the light beam, and adjusts the direction of the light beam emitted by the lens group. For example, after an optical path of the light beam is adjusted to a first downtilt optical path, the light beam is projected to the ground that is the first distance range (for example, 1 meter to 6 meters) away from the transport tool for imaging.

In this possible implementation, in the greeting mode, in comparison with the solution in which the motor rotates the entire module, the projection module adjusts the position of the reflector through the rotating component, to reduce the motor torque of the rotating component, so that the light beam can be projected to the ground that is closer to the transport tool for imaging.

Optionally, in a possible implementation of the first aspect, an included angle between a propagation direction that is of the light beam and that is adjusted by the reflection unit and a plane on which a chassis of the transport tool is located ranges from 9 degrees to 30 degrees.

In this possible implementation, flexible adjustment of the propagation direction may be implemented through position adjustment.

Optionally, in a possible implementation of the first aspect, in a traveling mode of the transport tool, the rotating component is configured to adjust the position of the reflection unit, so that the reflection unit leaves or deviates from a transmission path of the light beam.

In this possible implementation, in the traveling mode, in comparison with the solution in which the motor rotates the entire module, the projection module adjusts the position of the reflector through the rotating component, to reduce the motor torque of the rotating component, so that the light beam can be projected.

Optionally, in a possible implementation of the first aspect, in the traveling mode of the transport tool, that the rotating component is configured to adjust a position of the reflection unit, to change a projection position of the light beam includes: The rotating component is configured to adjust the position of the reflection unit, so that the reflection unit receives the light beam, and adjusts the direction of the light beam emitted by the lens group. For example, after the optical path of the light beam emitted by the lens group is adjusted to a second downtilt optical path, the light beam is projected to the ground that is the second distance range (for example, 8 meters to 50 meters) away from the transport tool for imaging. A minimum value of the second distance range is greater than a maximum value of the first distance range, and the included angle between the first downtilt optical path and the plane on which the chassis of the transport tool is located is greater than an included angle between the second downtilt optical path and the plane on which the chassis of the transport tool is located.

In this possible implementation, in the traveling mode, in comparison with the solution in which the motor rotates the entire module, the projection module adjusts the position of the reflector through the rotating component, to reduce the motor torque of the rotating component, so that the light beam can be projected to the ground that is farther away from the transport tool for imaging.

It should be understood that the rotating component needs to have a function of adjusting the reflector to the foregoing different positions, to change the projection position of the light beam (for example, 1 to 6 meters or 8 to 50 meters).

Optionally, in a possible implementation of the first aspect, the reflection unit includes a first reflector and a second reflector, and the rotating component is configured to adjust a position of the second reflector, so that the second reflector receives the light beam emitted by the lens group and reflects the light beam to the first reflector, and then the first reflector projects the light beam.

In this possible implementation, it is equivalent to fastening the first reflector, and the second reflector is adjusted through the rotating component, to implement switching between the greeting mode and the traveling mode. In this way, flexibility of a reflector adjustment mode is increased.

Optionally, in a possible implementation of the first aspect, the reflection unit includes a first reflector and a second reflector, and the rotating component is configured to adjust a position of the first reflector, so that the first reflector receives the light beam that is emitted by the lens group and that is reflected by the second reflector, and projects the light beam.

In this possible implementation, it is equivalent to fastening the second reflector, and the first reflector is adjusted through the rotating component, to implement switching between the greeting mode and the traveling mode. In this way, flexibility of a reflector adjustment mode is increased.

Optionally, in a possible implementation of the first aspect, the reflection unit includes a first reflector and a second reflector, and the rotating component is configured to adjust positions of the first reflector and the second reflector, so that the first reflector receives the light beam that is emitted by the lens group and that is reflected by the second reflector, and projects the light beam.

In this possible implementation, the positions of the first reflector and the second reflector are adjusted through the rotating component, to implement switching between the greeting mode and the traveling mode. In this way, flexibility of a reflector adjustment mode is increased.

Optionally, in a possible implementation of the first aspect, the reflection unit includes one reflector, the reflector is configured to receive the light beam emitted by the lens group, and a principal optical axis of the lens group is at a non-zero angle with the plane on which the chassis of the transport tool is located.

In this possible implementation, when the principal optical axis of the lens group is not parallel to the plane on which the chassis of the transport tool is located, the projection position may be adjusted through one reflector.

Optionally, in a possible implementation of the first aspect, the projection module further includes a baffle, the baffle is located between the reflection unit and the lens group, and the baffle is configured to block a part of light in the greeting mode.

In this possible implementation, the baffle is introduced, so that light leakage caused by incomplete reflection of the reflector can be reduced. In the greeting mode, unnecessary projection other than ground projection can be reduced or avoided.

Optionally, in a possible implementation of the first aspect, the projection module further includes a beam expander, and the light beam is projected through the beam expander. For example, the light beam is projected to the ground that is the second distance range away from the transport tool, a front of the transport tool, and a side of the transport tool for imaging.

In this possible implementation, the beam expander is introduced, so that an imaging contribution design of the lens group can be simplified, and more differentiated shaping requirements of an entire light can be met.

Optionally, in a possible implementation of the first aspect, the light source device includes a light source and a projection element, and the light source includes at least one of a light emitting diode (light emitting diode, LED), a laser diode (laser diode, LD), and the like. The projection element includes at least one of a liquid crystal display (liquid crystal display, LCD), a liquid crystal on silicon (liquid crystal on silicon, LCOS), a digital micro-mirror device (digital micro-mirror device, DMD), and the like.

In this possible implementation, when the light source device includes the light source but does not include the projection element, the projection module is mainly configured to switch between a high beam light and a low beam light of the transport tool. When the light source device further includes the projection element, the projection module is further configured to perform imaging outside the transport tool.

Optionally, in a possible implementation of the first aspect, the rotating component adjusts the position of the reflection unit by receiving a control signal.

Optionally, in a possible implementation of the first aspect, the rotating component implements switching between a low beam mode and a high beam mode of the projection module by adjusting the position of the reflection unit, where the low beam mode means that a projection position of the projection module is a first distance away from the transport tool, the low beam mode means that a projection position is a second distance away from the transport tool, and the first distance is less than the second distance.

In this possible implementation, switching between the low beam mode and the high beam mode of the projection module may be implemented through the control signal, so that the projection module can be applied to a wide range of scenarios.

A second aspect of this application provides a transport tool. The transport tool includes the projection module according to any one of the first aspect or the optional implementations of the first aspect. The projection module is installed on the transport tool.

Optionally, in a possible implementation of the second aspect, the transport tool further includes a processor, where the processor is configured to send a control signal to the projection module, and a rotating component adjusts a position of a reflection unit based on the control signal, to change a projection position of a light beam.

### BRIEF DESCRIPTION OF DRAWINGS

FIG. 1 to FIG. 12A, FIG. 12B, FIG. 12C, and FIG. 12D are several diagrams of a structure of a projection module according to an embodiment of this application;
FIG. 13 is a diagram in which a projection module is mounted on a transport tool according to an embodiment of this application; and
FIG. 14 is a diagram of a possible functional framework of a transport tool according to an embodiment of this application.

### DESCRIPTION OF EMBODIMENTS

This application provides a projection module and a transport tool. A reflection unit is added to the projection module, and a position of the reflection unit is adjusted through a rotating component, to change a projection position of a light beam. The reflection unit is added to the projection module, and the position of the reflection unit is adjusted through the rotating component, to change the projection position of the light beam. This can reduce a space requirement, and can reduce a motor torque, a drive current specification, power consumption and costs, and carbon dioxide emissions.

It should be understood that "first", "second", and the like used in this application are merely used for distinguishing and description, but should not be understood as an indication or implication of relative importance or an indication or implication of a sequence. In addition, for brevity and clarity, reference numbers and/or letters are repeated in a plurality of accompanying drawings in embodiments of this application. Repetition is not indicative of a strict limiting relationship between various embodiments and/or configurations.

Currently, in some projection scenarios (for example, a lighting system of a transport tool, or another projection scenario with limited space), a motor pushes an edge to rotate around a fulcrum to tilt an entire lighting unit. As a ramp and a road surface undulate, a light output angle and a position of a light beam on the ground are adaptively changed. In other words, an assembly of a bracket and the lighting unit is tilted up and down, to achieve guest imaging or front lighting. However, a rotation process in the foregoing solution requires large space, but a boundary of an automobile headlight is usually limited.

Therefore, this application provides a projection module, which may be applied to scenarios such as a lighting system of a transport tool and another projection scenario with limited space. In embodiments of this application, only an example in which the projection module is applied to an automobile headlight of the transport tool is used for description. Certainly, the projection module may also be applied to a taillight, a brake light, or the like of the transport tool. The projection module includes: a light source device, a lens group, a reflection unit, and a rotating component connected to the reflection unit. Light emitted by the light source device passes through the lens group to form a light beam, and the light beam is projected to the outside of the transport tool (for example, a front or a side of the transport tool). The reflection unit is configured to change a transmission direction of the light beam. The rotating component is configured to adjust a position of the reflection unit, to change a projection position of the light beam. A solution in which a motor rotates the entire module is replaced by the solution in which the position of the reflection unit is adjusted to perform projection at different distances. Therefore, the adjustment of the position of the reflector has a small requirement on space, thereby reducing space occupied by the camera module; and the rotating component does not need to rotate the entire module, but rotates the reflector in the projection module, thereby reducing a motor torque, a drive current specification, power consumption and costs, and carbon dioxide emissions. In addition, in a greeting mode, in comparison with the solution in which the motor rotates the entire module, the projection module adjusts the position of the reflector through the rotating component, so that the light beam can be projected to a ground that is closer to the transport tool for imaging.

There may be one, two, or more reflection units. In addition, the rotating component adjusts the position of the reflection unit, so that the transport tool to which the projection module is applied may be applied to the greeting mode, a traveling mode, or the like.

It may be understood that the reflection unit has a function of changing the projection position/propagation direction of the light beam. In a use process of the reflection unit, the reflection unit may change a direction of an optical path for some time (for example, in the greeting mode or the traveling mode), or may leave a propagation path of the light beam (which may be understood as not reflecting the light beam) for some time. Any case in which the rotating component changes the position of the reflection unit to change the projection position of the light beam for a period of time falls within the protection scope of this application.

In embodiments of this application, the light source device may include at least one of the following: a light source and a projection element. The light source includes at least one of a light emitting diode (light emitting diode, LED), a laser diode (laser diode, LD), and the like. The projection element includes at least one of a liquid crystal display (liquid crystal display, LCD), a liquid crystal on silicon (liquid crystal on silicon, LCOS), a digital micro-mirror device (digital micro-mirror device, DMD), and the like. When the light source device includes the light source but does not include the projection element, the projection module is mainly configured to switch between a high beam light and a low beam light of the transport tool. When the light source device further includes the projection element, the projection module is further configured to perform imaging outside the transport tool.

The light source device is configured to output an original light beam to the lens group. The lens group may include at least one of the following: a lens (for example, a convex lens or a concave lens), a reflector, a prism, a Fresnel lens, or the like. In addition, there may be one or more lenses in the lens group. This is not specifically limited herein. The reflector may have a curved surface with a specific curvature (for example, with a curved surface radius ranging from 1000 millimeters to 100000 millimeters), or may have a free curved surface, a spherical surface, or the like. When the reflector has a curved surface with a curvature, focal power can be corrected to improve a projection effect. The rotating component may include a rotating shaft, a driving motor/a solenoid valve of the rotating shaft, and the like. The rotating component is configured to control the reflector to adjust a projection angle of the light beam emitted by the lens group, to implement the greeting mode or the traveling mode of the transport tool.

The traveling mode may be understood as a scenario in which the transport tool is in a traveling process and needs long-range projection or does not need short-range projection. In the traveling mode, the projection module projects the light beam to a ground that is a second distance range away from the transport tool for imaging, or the projection module projects the light beam to the front of the transport tool for imaging. The greeting mode may be understood as a scenario in which the transport tool is not in a traveling process, or the transport tool is in a traveling process but needs short-range projection, or the transport tool does not need long-range projection. In the greeting mode, the projection module projects the light beam to a ground that is a second distance range away from the transport tool for imaging. The second distance range is greater than the first distance range. It may be understood that "the front" in "projecting to the front of the transport tool for imaging" may include a wall, a ground, or the like.

Optionally, the traveling mode may be understood as a high beam mode of the projection module, and the greeting mode may be understood as a low beam mode of the projection module. Specifically, the rotating component may adjust the position of the reflection unit by receiving a control signal, to implement switching between the low beam mode and the high beam mode of the projection module. The control signal may be generated by the transport tool based on an environment change or a user operation.

Certainly, to fasten the components in the projection module, corresponding brackets or housings may be configured for the reflector, the lens group, and the light source device.

The following separately describes the projection module provided in embodiments of this application based on different quantities of reflection units and different modes of the transport tool.

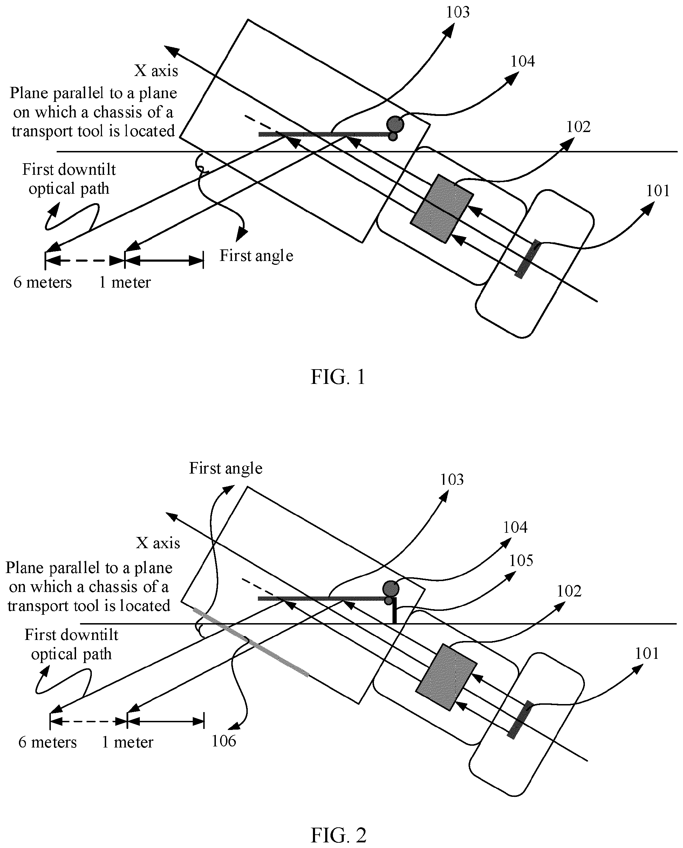

When the reflection unit is one reflector and the transport tool is in the greeting mode, FIG. 1 is a diagram of a structure of the projection module according to an embodiment of this application. As shown in FIG. 1, the projection module includes: a light source device 101, a lens group 102, a reflector 103, and a rotating component 104 connected to the reflector 103. A principal optical axis of the lens group 102 is at a non-zero angle with a plane on which a chassis of the transport tool is located. Light emitted by the light source device 101 passes through the lens group 102 to form a light beam. The rotating component 104 is configured to adjust a position of the reflector 103, to change a projection position of the light beam. For example, the light beam is projected to the ground that is a first distance range away from the transport tool for imaging. Alternatively, it is understood that the rotating component 104 is configured to adjust a position of the reflector 103, so that the reflector 103 outputs light beams in different transmission directions.

In FIG. 1, a main light ray of the light source device 101 coincides with an X axis, and the optical axis of the lens group 102 coincides with the X axis. Therefore, the main light ray of the light source device 101 coincides with the optical axis of the lens group 102. The rotating component 104 is configured to control the reflector 103 to adjust a projection angle of the light beam emitted by the lens group 102 (which may be understood as controlling a position of the reflection unit or adjusting a direction of the light beam emitted by the lens group 102), so as to implement the greeting mode or the traveling mode of the transport tool. In the greeting mode, the reflector 103 receives the light beam emitted by the lens group 102, adjusts an optical path of the light beam to a first downtilt optical path, and then projects the light beam to the ground that is the first distance range away from the transport tool for imaging. For example, an angle between the plane on which the chassis of the transport tool is located and the first downtilt optical path is a first angle (for example, the first angle ranges from 9 degrees to 30 degrees). The first distance range is 3 meters to 6 meters. It may be understood that the first angle and the first distance range in FIG. 1 are merely examples. In actual application, the first angle and the first distance range may be set based on a requirement. This is not specifically limited herein.

Optionally, to reduce light leakage caused by incomplete reflection of the reflector 103, as shown in FIG. 2, the projection module may further include a baffle 105. The baffle 105 is located between the reflector 103 and the lens group 102 (for example, the baffle 105 is located on a bracket on which the reflector 103 is located, or is located on a bracket on which the lens group 12 is located). The baffle 105 is configured to block a part of light. For example, in the greeting mode, a part of the light beam emitted by the lens group 102 may be reflected by the reflector 103, and the other part of the light beam is not reflected by the reflector 103. The baffle 105 is configured to prevent the other part of the light beam from being projected.

Optionally, to simplify an imaging contribution design of the lens group 102 and to adapt to more differentiated modeling requirements of an entire light, as shown in FIG. 2, the projection module may further include a beam expander 106. The light beam emitted by the reflector 103 is projected, through the beam expander 106, to the ground that is the first distance range away from the transport tool for imaging. The beam expander 106 may be a spherical lens with a specific curvature, a free-form curved lens (with a curvature radius ranging from 1000 millimeters to 100000 millimeters), a planar lens, or the like. In addition, the beam expander 106 may participate in imaging calculation, or may not participate in imaging calculation. This is not specifically limited herein.

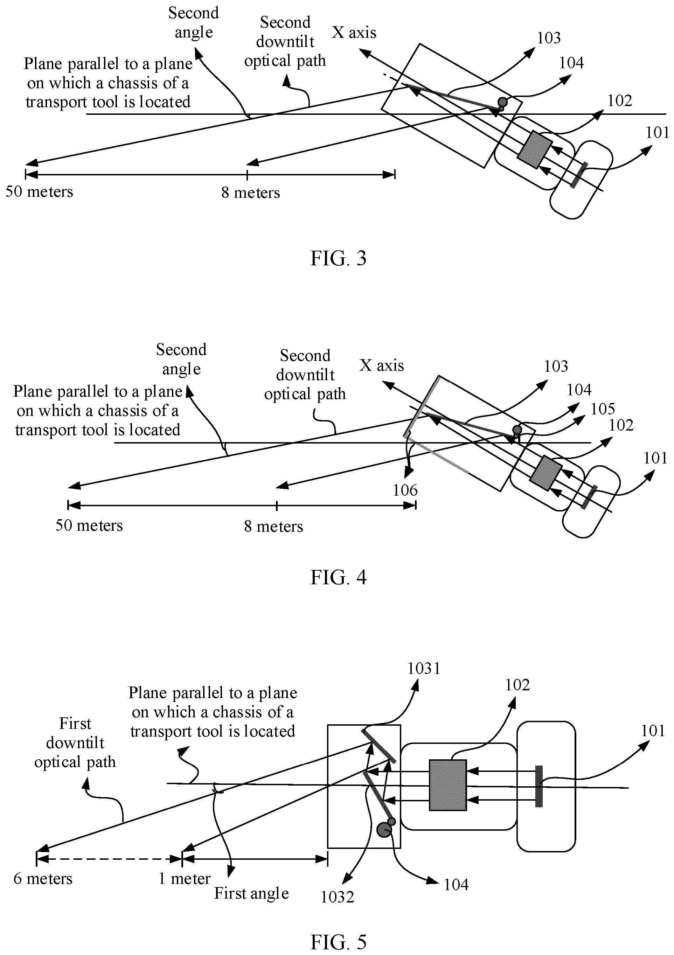

When the reflection unit is one reflector and the transport tool is in the traveling mode, FIG. 3 is a diagram of another structure of the projection module according to an embodiment of this application. As shown in FIG. 3, the projection module includes: a light source device 101, a lens group 102, a reflector 103, and a rotating component 104 connected to the reflector 103. Light emitted by the light source device 101 passes through the lens group 102 to form a light beam. The rotating component 104 is configured to adjust a position of the reflector 103 (for example, an adjustment angle of the reflector 103), so that the light beam is projected to the ground that is a second distance range away from the transport tool for imaging. It can be learned that a difference between FIG. 1 and FIG. 3 lies in the position of the reflector 103 or an angle between a mirror surface of the reflector 103 and a horizontal optical axis. A same part is not described herein again.

In FIG. 3, in the traveling mode, the reflector 103 receives the light beam emitted by the lens group 102, adjusts an optical path of the light beam to a second downtilt optical path, and then projects the light beam to the ground that is the second distance range away from the transport tool for imaging. For example, an angle between the plane on which the chassis of the transport tool is located (or a plane parallel to the plane on which the chassis of the transport tool is located) and the second downtilt optical path is a second angle (for example, the second angle ranges from 9 degrees to 30 degrees). The second distance range is 8 meters to 10 meters. It may be understood that the second angle and the second distance range in FIG. 2 are merely examples. In actual application, the second angle and the second distance range may be set based on a requirement. This is not specifically limited herein. In addition, generally, the first angle is greater than the second angle. In other words, an adjustment angle of the projection module for the light beam in the greeting mode is greater than an adjustment angle of the projection module for the light beam in the traveling mode.

Optionally, similar to that in FIG. 2, the projection module may further include a baffle 105 and/or a beam expander 106. As shown in FIG. 4, the projection module may further include the baffle 105, and the baffle 105 is located on a side that is of the reflector 103 and that is connected to the lens group 102. In the greeting mode, the baffle 105 is configured to prevent a part that is of the light beam and that is not reflected by the reflector 103 from being projected. The light beam emitted by the reflector 103 is projected, through the beam expander 106, to the ground that is the second distance range away from the transport tool for imaging. For descriptions of the baffle 105 and the beam expander 106, refer to the descriptions in FIG. 2. Details are not described herein again.

Optionally, a position of the baffle 105 shown in FIG. 4 may be farther away from the ground than the position of the baffle 105 shown in FIG. 2. Alternatively, it is understood that, after the greeting mode is switched to the traveling mode, not only the position of the reflector 103 is adjusted, but also the position of the baffle 105 may be correspondingly adjusted. In addition, to enable all light beams emitted by the reflector 103 to pass through the beam expander 106, one or more beam expanders 106 may be disposed in an emission direction of the reflector 103.

With reference to FIG. 1 to FIG. 4, it can be learned that the first angle is greater than the second angle. The first distance range is less than the second distance range. In other words, a projection distance of the projection module in the greeting mode is less than a projection distance of the projection module in the traveling mode.

It may be understood that an example in which the projection module shown in FIG. 1 to FIG. 4 is in an uptilt state is used. In actual application, the projection module may alternatively be in a downtilt state or the like. This is not specifically limited herein.

In embodiments of this application, the reflector 103 is added to the projection module, and the position of the reflector 103 is adjusted through the rotating component 104, so that the light beam is projected to a ground that is a close range (namely, the first distance range) or a far range (namely, the second distance range) away from the transport tool for imaging. The solution in which the motor rotates the entire module is replaced by the solution in which the position of the reflector 103 is adjusted to perform projection at different distances. Therefore, the adjustment of the position of the reflector 103 has a small requirement on space, thereby reducing space occupied by the camera module; and the rotating component 104 does not need to rotate the entire module, but rotates the reflector in the projection module, thereby reducing a motor torque, a drive current specification, power consumption and costs, and carbon dioxide emissions. In addition, in comparison with the solution in which the motor rotates the entire module, the projection module adjusts the position of the reflector 103 through the rotating component 104, so that the light beam can be projected to the ground that is closer to or farther away from the transport tool for imaging.

The foregoing describes a case in which the reflection unit includes one reflector. The following describes a case in which the reflection unit includes a plurality of reflectors. In embodiments of this application, only an example in which the plurality of reflectors are two reflectors is used for description.

In a case in which the reflection unit includes two reflectors and the transport tool is in the greeting mode, for example, an upper reflector and a lower reflector are separately arranged based on an angle difference of 1/2 of a frame, to meet a frame requirement of near projection. A focal plane adjustment function may be implemented during projection scenario switching, to achieve a better ground projection effect. It may be understood that the arrangement based on the angle difference of 1/2 of the frame is only a preferred solution. In actual application, another arrangement manner may alternatively be used. This is not specifically limited herein.

In addition, a connection between the two reflectors and the rotating component may have a plurality of cases, which are separately described below.

In a first case, a second reflector in the reflection unit is connected to the rotating component.

In this case, the rotating component is configured to adjust a position of the second reflector, so that the second reflector receives a light beam emitted by the lens group and reflects the light beam to a first reflector, and then the first reflector projects the light beam.

### 1. Greeting mode

FIG. 5 is a diagram of another structure of the projection module according to an embodiment of this application. As shown in FIG. 5, the projection module includes a light source device 101, a lens group 102, a first reflector 1031, a second reflector 1032, and a rotating component 104 connected to the second reflector 1032. The first reflector 1031 is fixedly disposed on one side of the lens group 102. The second reflector 1032 is connected to the rotating component 104, and the second reflector 1032 is disposed on the other side of the lens group 102 through the rotating component 104. In the greeting mode, the rotating component 104 is configured to adjust a position of the second reflector 1032, so that the second reflector 1032 receives a light beam emitted by the lens group 102 and reflects the light beam to the first reflector 1031, and then the first reflector 1031 projects the light beam.

In FIG. 5, a main light ray of the light source device 101 coincides with an X axis, and an optical axis of the lens group 102 coincides with the X axis. Therefore, the main light ray of the light source device 101 coincides with the optical axis of the lens group 102. The rotating component 104 is configured to control the second reflector 1032 to adjust a projection angle of the light beam emitted by the lens group 102 (which may be understood as controlling a position of the second reflector 1032), so that the light ray emitted by the second reflector 1032 may be reflected to the ground through the first reflector 1031 for imaging, or may be projected to a ground that is a first distance range away from the transport tool for imaging. For example, an angle between a plane on which a chassis of the transport tool is located and a first downtilt optical path is a first angle, and the first downtilt optical path is an optical path of the light beam emitted by the first reflector 1031 in the greeting mode. The first distance range is 3 meters to 6 meters. It may be understood that the first angle and the first distance range in FIG. 5 are merely examples. In actual application, the first angle and the first distance range may be set based on a requirement. This is not specifically limited herein.

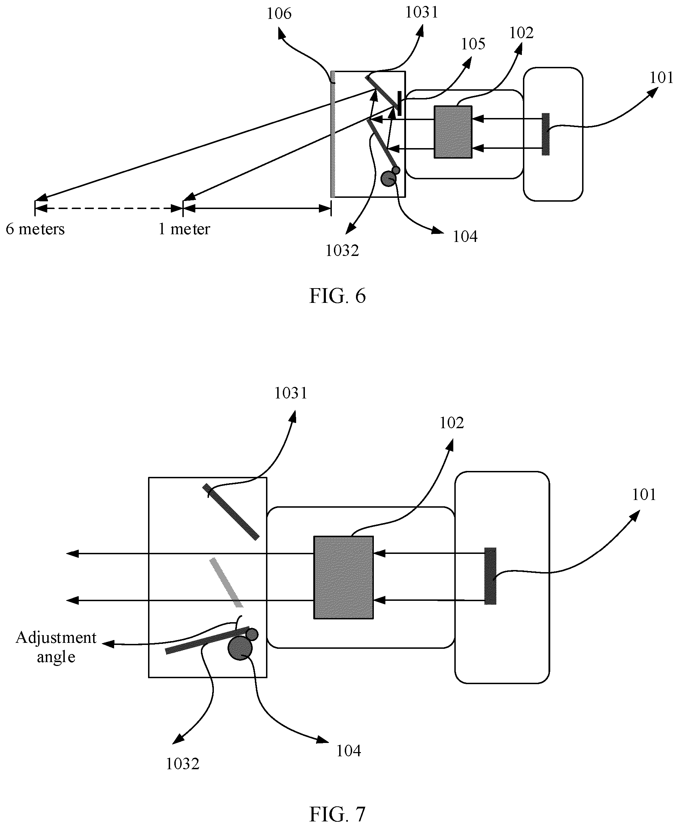

Optionally, similar to the embodiment shown in FIG. 2 or FIG. 4, as shown in FIG. 6, the projection module may further include a baffle 105 and/or a beam expander 106. As shown in FIG. 6, the baffle 105 is located on a side that is of the first reflector 1031 and that is connected to the lens group 102. In the greeting mode, the baffle 105 is configured to prevent a part that is of the light beam and that is not reflected by the second reflector 1032 to the first reflector 1031 (which may be understood as a light ray that is to be projected by the lens group 102 to the outside of a boundary of the second reflector 1032) from being projected. The beam expander 106 is configured to project the light beam emitted by the first reflector 1031 to the ground that is the first distance range away from the transport tool for imaging. For descriptions of the baffle 105 and the beam expander 106, refer to the descriptions in FIG. 2 or FIG. 4. Details are not described herein again.

In this embodiment, the first reflector 1031 and the second reflector 1032 are added to the projection module, and the position of the second reflector 1032 is adjusted through the rotating component 104, so that the second reflector 1032 receives the light beam emitted by the lens group 102, and reflects the light beam to the first reflector 1031 for imaging on the ground or projects the light beam to the ground that is close to (namely, the first distance range away from) the transport tool for imaging. A solution in which a motor rotates the entire module is replaced by the solution in which the position of the second reflector 1032 is adjusted to perform projection at different distances. Therefore, the adjustment of the position of the second reflector 1032 has a small requirement on space, thereby reducing space occupied by the camera module; and the rotating component 104 does not need to rotate the entire module, but rotates the second reflector 1032 in the projection module, thereby reducing a motor torque, a drive current specification, power consumption and costs, and carbon dioxide emissions. In addition, in the greeting mode, in comparison with the solution in which the motor rotates the entire module, the projection module adjusts the position of the second reflector 1032 through the rotating component 104, so that the light beam can be projected to the ground that is closer to the transport tool for imaging.

### 2. Traveling mode

FIG. 7 is a diagram of another structure of the projection module according to an embodiment of this application. As shown in FIG. 7, the projection module includes a light source device 101, a lens group 102, a first reflector 1031, a second reflector 1032, and a rotating component 104 connected to the second reflector 1032. The first reflector 1031 is fixedly disposed on one side of the lens group 102. The second reflector 1032 is connected to the rotating component 104, and the second reflector 1032 is disposed on the other side of the lens group 102 through the rotating component 104. In the traveling mode, the rotating component 104 is configured to adjust a position of the second reflector 1032 (for example, an adjustment angle of the second reflector 1032 in FIG. 7), so that the second reflector 1032 cannot receive a light beam emitted by the lens group 102 (which may be understood as enabling the second reflector 1032 to leave a transmission path of the light beam), and the light beam emitted by the lens group 102 is projected.

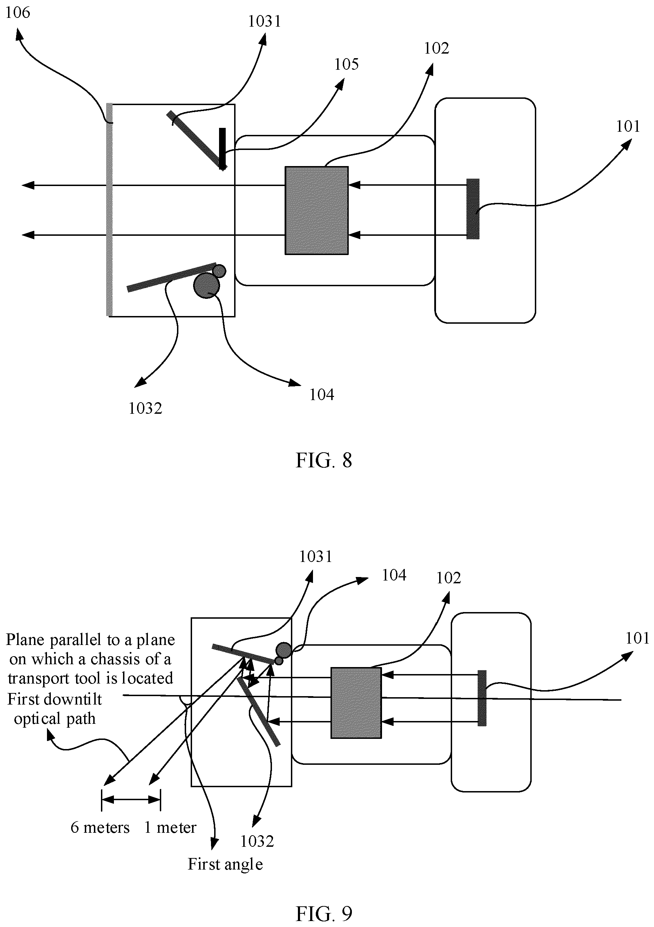

Optionally, similar to that in FIG. 6, the projection module may further include a baffle 105 and/or a beam expander 106. As shown in FIG. 8, the baffle 105 is located on a side that is of the first reflector 1031 and that is connected to the lens group 102. In the traveling mode, to reduce blocking of the light beam emitted by the lens group 102 by the baffle 105, a position of the baffle 105 may be adjusted (the position of the baffle 105 is farther away from the ground than the position of the baffle 105 shown in FIG. 6). The beam expander 106 is configured to project the light beam emitted by the lens group 102. For descriptions of the baffle 105 and the beam expander 106, refer to the descriptions in FIG. 6. Details are not described herein again.

Optionally, the position of the baffle 105 shown in FIG. 8 may be farther away from the ground than the position of the baffle 105 shown in FIG. 6. Alternatively, it is understood that after a greeting mode is switched to the traveling mode, not only the position of the second reflector 1032 is adjusted, but also the position of the baffle 105 may be correspondingly adjusted.

In this embodiment, the first reflector 1031 and the second reflector 1032 are added to the projection module, and the position of the second reflector 1032 is adjusted through the rotating component 104, so that the second reflector 1032 cannot receive a light beam emitted by the lens group 102, and the light beam emitted by the lens group 102 is projected. A solution in which a motor rotates the entire module is replaced by the solution in which the position of the second reflector 1032 is adjusted to perform front projection. Therefore, the adjustment of the position of the second reflector 1032 has a small requirement on space, thereby reducing space occupied by the camera module; and the rotating component 104 does not need to rotate the entire module, but rotates the second reflector 1032 in the projection module, thereby reducing a motor torque, a drive current specification, power consumption and costs, and carbon dioxide emissions. In addition, in the traveling mode, in comparison with the solution in which the motor rotates the entire module, the projection module adjusts the position of the second reflector 1032 through the rotating component 104, so that the light beam can be projected to a position far away from the transport tool or a front of the transport tool for imaging.

In a second case, a first reflector in the reflection unit is connected to the rotating component.

In this case, the rotating component is configured to adjust a position of the first reflector, so that the first reflector receives a light beam that is emitted by the lens group and that is reflected by the second reflector, and projects the light beam.

### 1. Greeting mode

FIG. 9 is a diagram of another structure of the projection module according to an embodiment of this application. As shown in FIG. 9, the projection module includes a light source device 101, a lens group 102, a first reflector 1031, a second reflector 1032, and a rotating component 104 connected to the first reflector 1031. The second reflector 1032 is fixedly disposed on one side of the lens group 102. The first reflector 1031 is connected to the rotating component 104, and the first reflector 1031 is disposed on the other side of the lens group 102 through the rotating component 104. The rotating component 104 is specifically configured to adjust a position of the first reflector 1031. In the greeting mode, the rotating component 104 is configured to adjust the position of the first reflector 1031, so as to receive a light beam reflected by the second reflector 1032, and project the light beam to a ground that is a first distance range away from the transport tool for imaging.

In FIG. 9, a main light ray of the light source device 101 coincides with an X axis, and an optical axis of the lens group 102 coincides with the X axis. Therefore, the main light ray of the light source device 101 coincides with the optical axis of the lens group 102. A light beam emitted by the lens group 102 is projected to the first reflector 1031 through the second reflector 1032, so that the first reflector 1031 projects the light beam to the ground for imaging. The rotating component 104 is configured to adjust the position of the first reflector 1031 (which may be understood as adjusting a projection angle of a light beam emitted by the first reflector 1031), so that light ray emitted by the second reflector 1032 may be reflected by the first reflector 1031 to the ground for imaging, or be projected to the ground that is the first distance range away from the transport tool for imaging. For example, an angle between a plane on which a chassis of the transport tool is located and a first downtilt optical path is a first angle, and the first downtilt optical path is an optical path of the light beam emitted by the first reflector 1031 in the greeting mode. The first distance range is 3 meters to 6 meters. It may be understood that the first angle and the first distance range in FIG. 9 are merely examples. In actual application, the first angle and the first distance range may be set based on a requirement. This is not specifically limited herein.

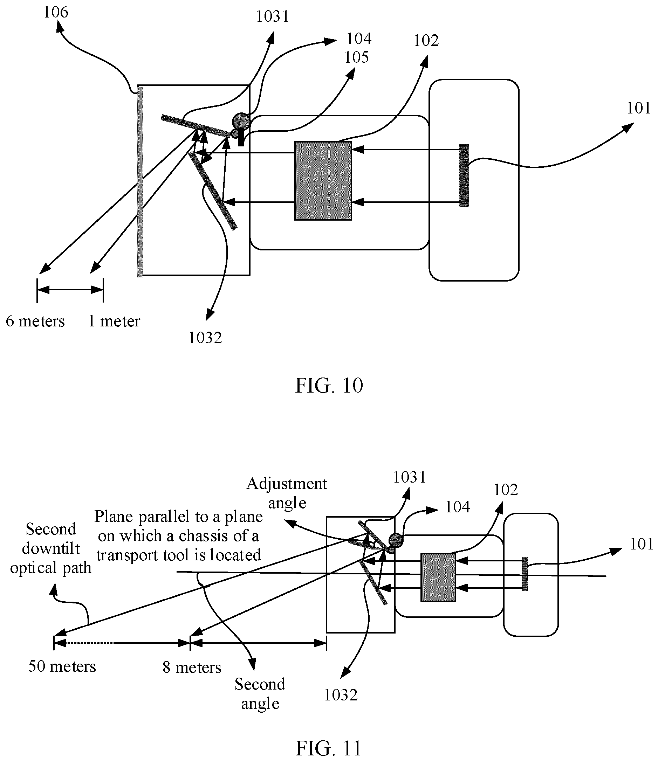

Optionally, the projection module may further include a baffle 105 and/or a beam expander 106. As shown in FIG. 10, the baffle 105 is located on a side that is of the first reflector 1031 and that is connected to the lens group 102. In the greeting mode, the baffle 105 is configured to prevent a part that is of a light beam and that is not reflected by the second reflector 1032 to the first reflector 1031 (which may be understood as a light ray that is to be projected by the lens group 102 to the outside of a boundary of the second reflector 1032) from being projected. The beam expander 106 is configured to project the light beam emitted by the first reflector 1031 to the ground that is the first distance range away from the transport tool for imaging. For descriptions of the baffle 105 and the beam expander 106, refer to the foregoing descriptions. Details are not described herein again.

In this embodiment, the first reflector 1031 and the second reflector 1032 are added to the projection module, and the position of the first reflector 1031 is adjusted through the rotating component 104, so that light ray emitted by the second reflector 1032 may be reflected to the ground through the first reflector 1031 for imaging, or may be projected to the ground that is close to (namely, the first distance range away from) the transport tool for imaging. A solution in which a motor rotates the entire module is replaced by the solution in which the position of the first reflector 1031 is adjusted to perform projection at different distances. Therefore, the adjustment of the position of the first reflector 1031 has a small requirement on space, thereby reducing space occupied by the camera module; and the rotating component 104 does not need to rotate the entire module, but rotates the first reflector 1031 in the projection module, thereby reducing a motor torque, a drive current specification, power consumption and costs, and carbon dioxide emissions. In addition, in the greeting mode, in comparison with the solution in which the motor rotates the entire module, the projection module adjusts the position of the first reflector 1031 through the rotating component 104, so that the light beam can be projected to the ground that is closer to the transport tool for imaging.

### 2. Traveling mode

FIG. 11 is a diagram of another structure of the projection module according to an embodiment of this application. As shown in FIG. 11, the projection module includes a light source device 101, a lens group 102, a first reflector 1031, a second reflector 1032, and a rotating component 104 connected to the first reflector 1031. The second reflector 1032 is fixedly disposed on one side of the lens group 102. The first reflector 1031 is connected to the rotating component 104, and the first reflector 1031 is disposed on the other side of the lens group 102 through the rotating component 104. The rotating component 104 is specifically configured to adjust a position of the first reflector 1031. In a greeting mode, the rotating component 104 is configured to adjust the position of the first reflector 1031, so as to receive a light beam reflected by the second reflector 1032, and project the light beam to a ground that is a second distance range away from the transport tool or a front of the transport tool for imaging.

In FIG. 11, a main light ray of the light source device 101 coincides with an X axis, and an optical axis of the lens group 102 coincides with the X axis. Therefore, the main light ray of the light source device 101 coincides with the optical axis of the lens group 102. A light beam emitted by the lens group 102 is projected to the first reflector 1031 through the second reflector 1032, so that the first reflector 1031 projects the light beam to the ground for imaging. The rotating component 104 is configured to adjust the position of the first reflector 1031 (which may be understood as adjusting a projection angle of a light beam emitted by the first reflector 1031), so that light ray emitted by the second reflector 1032 may be projected, through the first reflector 1031, to the ground that is the second distance range away from the transport tool or the front of the transport tool for imaging. For example, an angle between a plane on which a chassis of the transport tool is located and a second downtilt optical path is a second angle, and the second downtilt optical path is an optical path of a light beam emitted by the first reflector 1031 in the traveling mode. The second distance range is 8 meters to 50 meters. It may be understood that the second angle and the second distance range in FIG. 11 are merely examples. In actual application, the second angle and the second distance range may be set based on a requirement. This is not specifically limited herein.

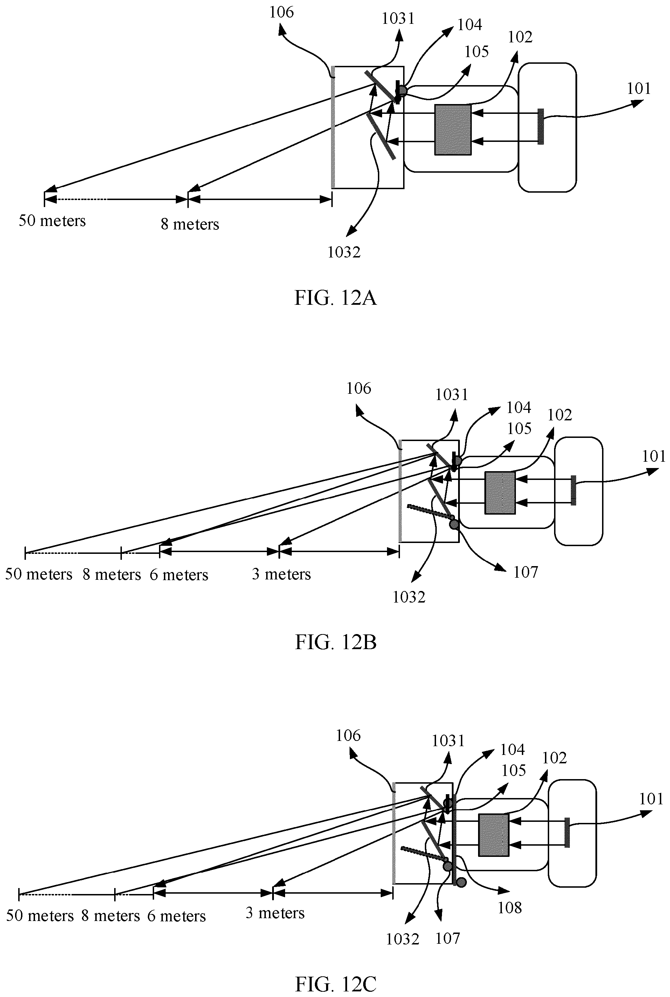

Optionally, similar to that in FIG. 9, the projection module may further include a baffle 105 and/or a beam expander 106. As shown in FIG. 12A, the baffle 105 is located on a side that is of the first reflector 1031 and that is connected to the lens group 102. In the traveling mode, to reduce blocking of the light beam emitted by the lens group 102 by the baffle 105, a position of the baffle 105 may be adjusted (the position of the baffle 105 is farther away from the ground than the position of the baffle 105 shown in FIG. 9). The beam expander 106 is configured to project the light beam emitted by the lens group 102 to the ground that is the second distance range away from the transport tool or the front of the transport tool for imaging. For descriptions of the baffle 105 and the beam expander 106, refer to the foregoing descriptions. Details are not described herein again.

Optionally, the position of the baffle 105 shown in FIG. 12A may be farther away from the ground than the position of the baffle 105 shown in FIG. 9. Alternatively, it is understood that after the greeting mode is switched to the traveling mode, not only the position of the first reflector 1031 is adjusted, but also the position of the baffle 105 may be correspondingly adjusted.

In this embodiment, the first reflector 1031 and the second reflector 1032 are added to the projection module, and the position of the first reflector 1031 is adjusted through the rotating component 104, to receive a light beam reflected by the second reflector 1032, and the light beam is projected to the ground that is the second distance range away from the transport tool or the front of the transport tool for imaging. A solution in which a motor rotates the entire module is replaced by the solution in which the position of the first reflector 1031 is adjusted to perform front projection. Therefore, the adjustment of the position of the first reflector 1031 has a small requirement on space, thereby reducing space occupied by the camera module; and the rotating component 104 does not need to rotate the entire module, but rotates the first reflector 1031 in the projection module, thereby reducing a motor torque, a drive current specification, power consumption and costs, and carbon dioxide emissions. In addition, in the traveling mode, in comparison with the solution in which the motor rotates the entire module, the projection module adjusts the position of the first reflector 1031 through the rotating component 104, so that the light beam can be projected to a position far away from the transport tool or the front of the transport tool for imaging.

It may be understood that the foregoing two cases of connections between the reflectors and the rotating component are merely examples. In actual application, there may be another form. For example, the first reflector 1031 and the second reflector 1032 are separately connected to the rotating component, and the rotating component is configured to control positions of the first reflector 1031 and the second reflector 1032 to implement short-range projection or long-range projection. A case of a connection between a reflector and a rotating component is not limited herein.

In a third case, a first reflector in the reflection unit is connected to a first rotating component, and a second reflector in the reflection unit is connected to a second rotating component.

This case may be understood as that a plurality of reflectors are separately connected to rotating components. In other words, two motors respectively control the first rotating component and the second rotating component. The first reflector is connected to the first rotating component, and the first reflector is disposed on one side of a lens group through the first rotating component. The second reflector is connected to the second rotating component, and the second reflector is disposed on the other side of the lens group through the second rotating component.

FIG. 12B is a diagram of another structure of the projection module according to an embodiment of this application. As shown in FIG. 12B, the projection module includes: a light source device 101, a lens group 102, a first reflector 1031, a second reflector 1032, a first rotating component 104 connected to the first reflector 1031, a baffle 105, and a rotating component 107 connected to the second reflector 1032. The first rotating component 104 is connected to the baffle 105, and the first reflector 1031 is disposed on one side of the lens group 102. The second reflector 1032 is connected to the second rotating component 107, and the second reflector 1032 is disposed on the other side of the lens group 102 through the second rotating component 107.

Specifically, in a traveling mode, the first rotating component 104 is configured to adjust positions of the baffle 105 and the first reflector 1031, so that the baffle 105 moves upward, to reduce blocking of a projection light ray of the lens group 103 by the baffle 105. In addition, the first reflector 1031 is adjusted to a position at which a light ray reflected from the second reflector 1032 cannot be received. The second rotating component 107 is configured to adjust a position of the second reflector 1032 (for example, an adjustment angle of the second reflector 1032 in FIG. 12B), so that the second reflector 1032 cannot receive a light beam emitted by the lens group 102 (which may be understood as enabling the second reflector 1032 to leave a transmission path of the light beam), and the light beam emitted by the lens group 102 is projected.

In a greeting mode, the first rotating component 104 is configured to adjust the positions of the baffle 105 and the first reflector 1031, so that the baffle 105 moves downward, to prevent a light ray reflected by the lens group 102 from being reflected without passing through a reflection unit. In addition, the first reflector 1031 is adjusted to a position at which a light ray reflected from the second reflector 1032 can be received. The second rotating component 107 is configured to adjust the position of the second reflector 1032, so that the second reflector 1032 receives a light beam emitted by the lens group 102 and projects the light beam to the ground through the first reflector 1031.

Optionally, the projection module may further include a beam expander 106. For descriptions of the beam expander 106, refer to the foregoing descriptions. Details are not described herein again.

Further, the first rotating component 104 may include a first rotating shaft gear and a first motor gear, and the first rotating shaft gear is engaged with the first motor gear. The first rotating shaft gear is separately connected to the first reflector 1031 and the baffle 105. After receiving a signal, a motor corresponding to the first motor gear drives the first rotating shaft gear through the first motor gear, to drive the first reflector 1031 to move with the baffle 105. The second rotating component 107 may include a second rotating shaft gear and a second motor gear, and the second rotating shaft gear is engaged with the second motor gear. The second rotating shaft gear is connected to the second reflector 1032. After receiving a signal, a motor corresponding to the second motor gear drives the second rotating shaft gear through the second motor gear, to drive the second reflector 1032 to rotate.

Parameters (for example, including at least one of the following: a gear module, a tooth quantity, or the like) of the first rotating shaft gear and the second rotating shaft gear are different. Therefore, angles by which the two gears turn to final states are different. In addition to implementing near-field greeting (for example, 3 meters to 6 meters), the second reflector 1032 can further implement image projection on a distant road surface (for example, a dynamic blanket of 8 meters to 50 meters) during driving.

This case may be understood as follows: The first reflector 1031 is fastened at a fixed position or is driven by the first rotating component 104 to rotate to a preset position. After receiving a vehicle-end signal, the two motors separately drive the baffle 105 and the second reflector 1032 at the same time to flip upward to different states. The different states correspond to near-field greeting and far-field projection (real-time projection on a distant road surface of 8 meters to 50 meters, for example, a dynamic blanket).

In addition, when the projection module includes a baffle, in addition to using the two motors to separately control the baffle and the second reflector, the baffle and the second reflector may alternatively be controlled through one motor, which is described below.

In a first case, the motor simultaneously controls positions of the baffle and the second reflector through a rack pair.

This case may also be understood as that the first rotating component and the second rotating component are connected simultaneously through one rack pair. In this way, one motor may be used to control the rack pair to simultaneously rotate the first rotating component and the second rotating component. The first rotating component is connected to the baffle, the first reflector is disposed on one side of the lens group, and the second reflector is disposed on the other side of the lens group through the second rotating component. In other words, compared with the projection modules in FIG. 1 to FIG. 11, the projection module further includes the rack pair controlled by the motor in terms of structure, where the rack pair is separately connected to the first rotating component and the second rotating component.

FIG. 12C is a diagram of another structure of the projection module according to an embodiment of this application. As shown in FIG. 12C, the projection module includes: a light source device 101, a lens group 102, a first reflector 1031, a second reflector 1032, a first rotating component 104, a baffle 105 connected to the first rotating component 104, a rotating component 107 connected to the second reflector 1032, and a rack pair 108. The rack pair 108 is separately connected to the first rotating component 104 and the second rotating component 107. The first reflector 1031 is disposed on one side of the lens group 102. The second reflector 1032 is connected to the second rotating component 107, and the second reflector 1032 is disposed on the other side of the lens group 102 through the second rotating component 107.

Specifically, in a traveling mode, the first rotating component 104 is configured to adjust a position of the baffle 105, so that the baffle 105 moves upward, to reduce blocking of a projection light ray of the lens group 103 by the baffle 105. The second rotating component 107 is configured to adjust a position of the second reflector 1032, so that the second reflector 1032 cannot receive a light beam emitted by the lens group 102 (which may be understood as enabling the second reflector 1032 to leave a transmission path of the light beam), and the light beam emitted by the lens group 102 is projected.

In a greeting mode, the first rotating component 104 is configured to adjust the position of the baffle 105, so that the baffle 105 moves downward, to prevent a light ray reflected by the lens group 102 from being reflected without passing through a reflection unit. The second rotating component 107 is configured to adjust the position of the second reflector 1032, so that the second reflector 1032 receives a light beam emitted by the lens group 102 and projects the light beam to the ground through the first reflector 1031.

Optionally, the first rotating component 104 may be further configured to adjust a position of the first reflector 1031 to meet the foregoing traveling mode and greeting mode.

Optionally, the projection module may further include a beam expander 106. For descriptions of the beam expander 106, refer to the foregoing descriptions. Details are not described herein again.

Further, the first rotating component 104 may include a first rotating shaft gear and a first motor gear, and the first rotating shaft gear is engaged with the first motor gear. The first rotating shaft gear is connected to the baffle 105. The second rotating component 107 may include a second rotating shaft gear and a second motor gear, and the second rotating shaft gear is engaged with the second motor gear. The second rotating shaft gear is connected to the second reflector 1032. The first motor gear and the second motor gear correspond to one motor (or it is understood that one motor is used to simultaneously control the first motor gear and the second motor gear through a rack pair). After receiving a signal, the motor may not only drive the first rotating shaft gear through the first motor gear to drive the first reflector 1031 to move with the baffle 105, but also may drive the second rotating shaft gear through the second motor gear to drive the second reflector 1032 to rotate.

Parameters (for example, including at least one of the following: a gear module, a tooth quantity, or the like) of the first rotating shaft gear and the second rotating shaft gear are different. Therefore, angles by which two gears driven by one motor turn to final states are different. In this way, positions of the baffle and the second reflector are adjusted at the same time, so that besides near-field greeting (for example, 3 meters to 6 meters), image projection on a distant road surface (for example, a dynamic blanket of 8 meters to 50 meters) during driving can be implemented.

This case may be understood as follows: The first reflector 1031 is fastened at a fixed position or is driven by the first rotating component 104 to rotate to a preset position. After receiving a vehicle-end signal, one motor drives, at the same time through a rack pair, the baffle 105 and the second reflector 1032 to move. Because parameters of gears corresponding to the baffle 105 and the second reflector 1032 are different, angles by which two gears driven by the motor turn to final states are different. In this way, positions of the baffle and the second reflector are adjusted at the same time, so that besides near-field greeting (for example, 3 meters to 6 meters), image projection on a distant road surface (for example, a dynamic blanket of 8 meters to 50 meters) during driving can be implemented.

In a second case, the motor simultaneously controls positions of the baffle and the second reflector through a plurality of groups of gears.

In this case, it may also be understood that one end of the plurality of groups of gears is connected to the first rotating component, and the other end of the plurality of groups of gears is connected to the second rotating component. In this way, one motor may be used to control the plurality of groups of gears to simultaneously rotate the first rotating component and the second rotating component. The first rotating component is connected to the baffle, the first reflector is disposed on one side of the lens group, and the second reflector is disposed on the other side of the lens group through the second rotating component. Specifically, compared with the projection modules in FIG. 1 to FIG. 11, the projection module further includes the rack pair controlled by the motor in terms of structure, where the rack pair is separately connected to the first rotating component and the second rotating component.

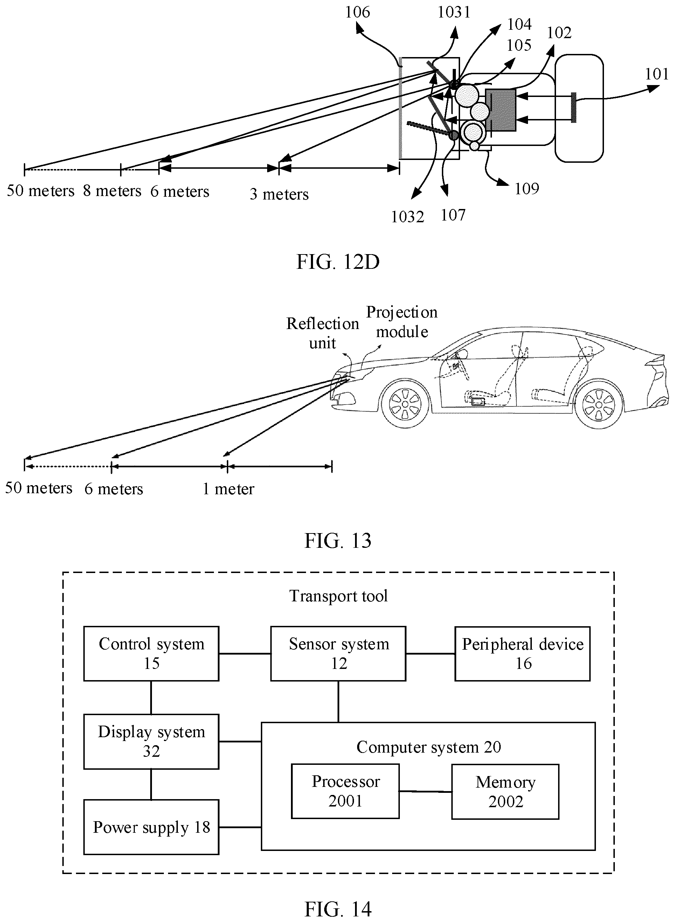

FIG. 12D is a diagram of another structure of the projection module according to an embodiment of this application. As shown in FIG. 12D, the projection module includes: a light source device 101, a lens group 102, a first reflector 1031, a second reflector 1032, a first rotating component 104, a baffle 105 connected to the first rotating component 104, a rotating component 107 connected to the second reflector 1032, and a plurality of groups of gears 109. The plurality of groups of gears 109 are separately connected to the first rotating component 104 and the second rotating component 107. The first reflector 1031 is disposed on one side of the lens group 102. The second reflector 1032 is connected to the second rotating component 107, and the second reflector 1032 is disposed on the other side of the lens group 102 through the second rotating component 107.

For descriptions of a traveling mode and a greeting mode, refer to the foregoing descriptions of the first case. Details are not described herein again. Specifically, a difference from the first case mainly lies in a connection object of one motor. To be specific, in the first case, one motor controls the first rotating component and the second rotating component simultaneously through the rack pair. In this case, one motor controls the first rotating component and the second rotating component simultaneously through the plurality of groups of gears.

Optionally, the first rotating component 104 may be further configured to adjust a position of the first reflector 1031 to meet the foregoing traveling mode and greeting mode.

Optionally, the projection module may further include a beam expander 106. For descriptions of the beam expander 106, refer to the foregoing descriptions. Details are not described herein again.

Further, the first rotating component 104 may include a first rotating shaft gear and a first motor gear, and the first rotating shaft gear is engaged with the first motor gear. The first rotating shaft gear is connected to the baffle 105. The second rotating component 107 may include a second rotating shaft gear and a second motor gear, and the second rotating shaft gear is engaged with the second motor gear. The second rotating shaft gear is connected to the second reflector 1032. The first motor gear and the second motor gear correspond to one motor (or it is understood that one motor is used to simultaneously control the first motor gear and the second motor gear through a plurality of groups of gears). After receiving a signal, the motor may not only drive the first rotating shaft gear through the first motor gear to drive the first reflector 1031 to move with the baffle 105, but also may drive the second rotating shaft gear through the second motor gear to drive the second reflector 1032 to rotate.

In a possible implementation, parameters (for example, including at least one of the following: a gear module, a tooth quantity, or the like) of the first rotating shaft gear and the second rotating shaft gear are different. Therefore, angles by which two gears driven by one motor turn to final states are different. In this way, positions of the baffle and the second reflector are adjusted at the same time, so that besides near-field greeting (for example, 3 meters to 6 meters), image projection on a distant road surface (for example, a dynamic blanket of 8 meters to 50 meters) during driving can be implemented. In other words, in FIG. 12D, parameters of the first rotating component 104 are different from parameters of the second rotating component 107.

In another possible implementation, a parameter of a gear that is in the plurality of groups of gears and that is engaged with the first rotating shaft gear is different from a parameter of a gear that is in the plurality of groups of gears and that is engaged with the second rotating shaft gear. Therefore, angles by which two gears driven by one motor turn to final states are different. In this way, positions of the baffle and the second reflector are adjusted at the same time, so that besides near-field greeting (for example, 3 meters to 6 meters), image projection on a distant road surface (for example, a dynamic blanket of 8 meters to 50 meters) during driving can be implemented. In other words, in FIG. 12D, parameters of an upper gear (namely, a gear connected to the first rotating component in the plurality of groups of gears 109) and a lower gear (namely, a gear connected to the second rotating component in the plurality of groups of gears 109) in the plurality of groups of gears 109 are different.

It may be understood that the foregoing two possible implementations are merely examples. In actual application, another manner may alternatively be used to enable angles of two gears driven by one motor to final states to be different. This is not specifically limited herein.

This case may be understood as follows: The first reflector 1031 is fastened at a fixed position or is driven by the first rotating component 104 to rotate to a preset position. After receiving a vehicle-end signal, one motor drives, at the same time through a plurality of groups of gears, the baffle 105 and the second reflector 1032 to move. Because parameters of the gears corresponding to the baffle 105 and the second reflector 1032 are different, angles by which two gears driven by the motor turn to final states are different. In this way, positions of the baffle and the second reflector are adjusted at the same time, so that besides near-field greeting (for example, 3 meters to 6 meters), real-time projection on a distant road surface of 8 meters to 50 meters, for example, a dynamic blanket, during driving can be implemented based on a requirement.

It may be understood that the foregoing descriptions are merely provided by using the rack pair and the plurality of groups of gears as an example. In actual application, the first rotating component and the second rotating component may alternatively be simultaneously connected through another component (for example, a gear pair), which is not specifically limited herein.

In addition, the foregoing descriptions are merely provided by using an example in which the first reflector is fastened and the second reflector is rotatable. In actual application, alternatively, the second reflector may be fastened, and the first reflector is rotatable. Alternatively, both the first reflector and the second reflector may be rotatable, or the like. This is not specifically limited herein.

An embodiment of this application further provides a transport tool. The transport tool is provided with any one of the foregoing projection modules or a projection system. The projection module or the projection system includes: a light source device, a lens group, a reflection unit, and a rotating component connected to the reflection unit. Light emitted by the light source device passes through the lens group to form a light beam. The rotating component is configured to adjust a position of the reflection unit, to change a projection position of the light beam. There may be one, two, or more reflection units. In addition, the rotating component adjusts the position of the reflection unit, so that the transport tool to which the projection module is applied may be applied to a greeting mode, a traveling mode, or the like.

An embodiment of this application further provides a transport tool. The transport tool is provided with any one of the projection modules in FIG. 1 to FIG. 12D. FIG. 13 is a diagram in which a projection module is mounted on a transport tool according to an embodiment of this application. Alternatively, it is understood that the projection module is a part of a headlight of the transport tool. The transport tool implements short-range (for example, 1 meter to 6 meters) projection, long-range (for example, 6 meters to 50 meters) projection, or forward projection by controlling an angle or a position of a reflection unit in the projection module.

Optionally, the transport tool further includes a processor, where the processor is configured to send a control signal to the projection module, and a rotating component adjusts the position of the reflection unit based on the control signal, to change a projection position of a light beam. The processor may be at least one of processors/controllers such as an electronic control unit (electronic control unit, ECU) and a body control module 140 (body control module, BCM).

For example, the transport tool may be a car, a truck, a motorcycle, a bus, a boat, an airplane, a helicopter, a lawn mower, a recreational vehicle, a playground vehicle, a construction device, a trolley, a golf cart, a train, a handcart, or the like. This is not specifically limited in embodiments of this application. The projection module may be installed on a lighting system (for example, an automobile headlight, a taillight, or a brake light) of the transport tool. The projection module can be used to perform high light and low light switching, greeting, projection, and the like.

FIG. 14 is a diagram of a possible functional framework of a transport tool according to an embodiment of this application.

As shown in FIG. 14, the functional framework of the transport tool may include various subsystems, for example, a control system 15, a sensor system 12, one or more peripheral devices 16 (one is used as an example in the figure), a power supply 18, a computer system 20, and a display system 32 shown in the figure. Optionally, the transport tool may further include another functional system, for example, an engine system that supplies power to the transport tool. This is not limited herein in this application.

The sensor system 12 may include several detection apparatuses. The detection apparatuses can sense measured information, and convert the sensed information into an electrical signal or other information in a required form based on a specific rule for output. As shown in the figure, the detection apparatuses may include a global positioning system (global positioning system, GPS), a vehicle speed sensor, an inertial measurement unit (inertial measurement unit, IMU), a radar unit, a laser rangefinder, a camera apparatus, a wheel speed sensor, a steering sensor, a gear sensor, another element used for automatic detection, or the like. This is not limited in this application.

The control system 15 may include several elements, for example, a steering unit, a brake unit, a lighting system, an autonomous driving system, a map navigation system, a network time system, and an obstacle avoidance system shown in the figure. Optionally, the control system 15 may further include elements such as a throttle processor and an engine processor that are configured to control a driving speed of a vehicle, and the like. This is not limited in this application.

The peripheral device 16 may include several elements, for example, a communication system, a touchscreen, a user interface, a microphone, a speaker, and the like shown in the figure. The communication system is configured to implement network communication between the transport tool and another device other than the transport tool. In actual application, the communication system may implement network communication between the transport tool and another device by using a wireless communication technology or a wired communication technology. The wired communication technology may mean that a vehicle communicates with the another device through a network cable, an optical fiber, or the like.

The power supply 18 represents a system for providing power or energy for the vehicle, and may include but is not limited to a rechargeable lithium battery or lead-acid battery. In actual application, one or more battery modules in the power supply are configured to provide electrical energy or energy for starting the vehicle. A type and a material of the power supply are not limited in this application.

Several functions of the transport tool are all controlled and implemented by the computer system 20. The computer system 20 may include one or more processors 2001 (one processor is shown as an example in the figure) and a memory 2002 (which may also be referred to as a storage apparatus). In actual application, the memory 2002 is also inside the computer system 20, or may be outside the computer system 20, for example, used as a cache in the transport tool. This is not limited in this application.

For descriptions of the processor 2001, refer to the descriptions of the processor 1301. The processor 2001 may include one or more general-purpose processors, for example, a graphics processing unit (graphics processing unit, GPU). The processor 2001 may be configured to run a related program stored in the memory 2002 or instructions corresponding to a program, to implement a corresponding function of the vehicle.

The memory 2002 may include a volatile memory (volatile memory), for example, a RAM. The memory may alternatively include a non-volatile memory (non-volatile memory), for example, a ROM, a flash memory (flash memory), or a solid state drive (solid state drive, SSD). The memory 2002 may alternatively include a combination of the foregoing types of memories. The memory 2002 may be configured to store a set of program code or instructions corresponding to program code, so that the processor 2001 invokes the program code or the instructions stored in the memory 2002 to implement a corresponding function of the vehicle. The function includes but is not limited to some or all functions in the diagram of the functional framework of the vehicle shown in FIG. 14. In this application, the memory 2002 may store a set of program code for controlling the vehicle. The processor 2001 may control safe driving of the vehicle by invoking the program code. A manner of implementing safe driving of the vehicle is specifically described in detail below in this application.

Optionally, in addition to storing the program code or the instructions, the memory 2002 may store information such as a road map, a driving route, and sensor data. The computer system 20 may implement a vehicle-related function in combination with other elements in the diagram of the functional framework of the vehicle, for example, a sensor and a GPS in the sensor system. For example, the computer system 20 may control a driving direction, a driving speed, or the like of the transport tool based on data input of the sensor system 12. This is not limited in this application.

The display system 32 may include several elements, for example, a processor and any projection module described in FIG. 1 to FIG. 13. The processor is configured to generate an image based on a user instruction, and send the image content to the projection module. A reflection unit is added to the projection module, and a position of the reflection unit is adjusted through a rotating component, to change a projection position of a light beam. A solution in which a motor rotates the entire module is replaced by the solution in which a position of the reflector is adjusted to perform projection. Therefore, the adjustment of the position of the reflector has a small requirement on space, thereby reducing space occupied by the camera module, and reducing a motor torque, a drive current specification, power consumption and costs, and carbon dioxide emissions. In addition, the position of the reflection unit is adjusted through the rotating component, so that a light beam can be projected to the ground that is close to the projection module for imaging. It should be noted that functions of some elements in the display system 32 may alternatively be implemented by another subsystem of the vehicle. For example, the processor may alternatively be an element in the control system 15.

It may be understood that the projection module may alternatively be located in the lighting system, and is configured to implement high and low beam illumination and/or projection of the transport tool.

In this application, as shown in FIG. 14, four subsystems are included. The sensor system 12, the control system 15, the computer system 20, and the display system 32 are merely examples, and do not constitute a limitation. In actual application, the transport tool may combine several elements in the vehicle based on different functions, to obtain subsystems with corresponding different functions. In actual application, the transport tool may include more or fewer systems or elements. This is not limited in this application.

In the descriptions of this specification, the specific features, structures, materials, or characteristics may be combined in an appropriate manner in any one or more of embodiments or examples.

The foregoing descriptions are merely specific implementations of this application, but are not intended to limit the protection scope of this application. Any variation or replacement readily figured out by persons skilled in the art within the technical scope disclosed in this application shall fall within the protection scope of this application. Therefore, the protection scope of this application shall be subject to the protection scope of the claims.

## Claims

1. A projection module, wherein the projection module is applied to a transport tool, and the projection module comprises a light source device, a lens group, a reflection unit, and a rotating component connected to the reflection unit, wherein
light emitted by the light source device passes through the lens group to form a light beam, and the light beam is projected to the outside of the transport tool;
the reflection unit is configured to change a transmission direction of the light beam; and
the rotating component is configured to adjust a position of the reflection unit, to change a projection position of the light beam.

2. The projection module according to claim 1, wherein that the rotating component is configured to adjust a position of the reflection unit, to change a projection position of the light beam comprises: the rotating component is configured to adjust the position of the reflection unit, so that the reflection unit receives the light beam, adjusts the direction of the light beam emitted by the lens group, and projects the light beam to a ground that is a first distance range away from the transport tool for imaging.

3. The projection module according to claim 2, wherein the first distance range is 1 meter to 6 meters.

4. The projection module according to claim 2 or 3, wherein an included angle between a propagation direction that is of the light beam and that is adjusted by the reflection unit and a plane on which a chassis of the transport tool is located ranges from 9 degrees to 30 degrees.

5. The projection module according to any one of claims 1 to 4, wherein that the rotating component is configured to adjust a position of the reflection unit, to change a projection position of the light beam comprises: the rotating component is configured to adjust the position of the reflection unit, so that the reflection unit receives the light beam, and projects the light beam emitted by the lens group to a ground that is a second distance range away from the transport tool for imaging.

6. The projection module according to claim 5, wherein the second distance range is 8 meters to 50 meters.

7. The projection module according to any one of claims 1 to 6, wherein the reflection unit comprises a first reflector and a second reflector, and the rotating component is configured to adjust a position of the second reflector, so that the second reflector receives the light beam emitted by the lens group and reflects the light beam to the first reflector, and then the first reflector projects the light beam.

8. The projection module according to any one of claims 1 to 6, wherein the reflection unit comprises a first reflector and a second reflector, and the rotating component is configured to adjust a position of the first reflector, so that the first reflector receives the light beam that is emitted by the lens group and that is reflected by the second reflector, and projects the light beam.

9. The projection module according to any one of claims 1 to 6, wherein the reflection unit comprises a first reflector and a second reflector, and the rotating component is configured to adjust positions of the first reflector and the second reflector, so that the second reflector receives the light beam emitted by the lens group and reflects the light beam to the first reflector, and then the first reflector projects the light beam.

10. The projection module according to any one of claims 1 to 6, wherein the reflection unit comprises one reflector, the reflector is configured to receive the light beam emitted by the lens group, and a principal optical axis of the lens group is at a non-zero angle with the plane on which the chassis of the transport tool is located.

11. The projection module according to any one of claims 1 to 10, wherein the projection module further comprises a baffle, the baffle is located between the reflection unit and the lens group, and the baffle is configured to block a part of light.

12. The projection module according to any one of claims 1 to 11, wherein the projection module further comprises a beam expander, and the light beam is projected to a front of the transport tool through the beam expander for imaging.

13. The projection module according to any one of claims 1 to 12, wherein the light source device comprises a light source and a projection element, the light source comprises a light emitting diode LED or a laser diode LD, and the projection element comprises any one of a liquid crystal display LCD, a liquid crystal on silicon LCOS, and a digital micro-mirror device DMD.

14. The projection module according to any one of claims 1 to 13, wherein the rotating component adjusts the position of the reflection unit by receiving a control signal.

15. The projection module according to claim 14, wherein the rotating component implements switching between a low beam mode and a high beam mode of the projection module by adjusting the position of the reflection unit, wherein the low beam mode means that a projection position of the projection module is a first distance away from the transport tool, the low beam mode means that a projection position is a second distance away from the transport tool, and the first distance is less than the second distance.

16. Atransport tool, comprising the projection module according to any one of claims 1 to 15, wherein the projection module is installed on the transport tool.

17. The transport tool according to claim 16, wherein the transport tool further comprises a processor, the processor is configured to send a control signal to the projection module, and a rotating component adjusts a position of a reflection unit based on the control signal, to change a projection position of a light beam.
